# EUROPEAN PATENT SPECIFICATION

(11) **EP 4 265 485 B1**
(45) Date of publication and mention of the grant of the patent: **06.08.2025**
(21) Application number: 22169568.7
(22) Date of filing: 22.04.2022
(51) Int. Cl.: B60S 1/34, B60S 1/40, B60S 1/04

(54) **A COVER DEVICE FOR A WIPER ARM OF A VEHICLE**
ABDECKVORRICHTUNG FÜR EINEN WISCHERARM EINES FAHRZEUGS
DISPOSITIF DE RECOUVREMENT POUR UN BRAS D'ESSUIE-GLACE D'UN VÉHICULE

(43) Date of publication of application: 25.10.2023
(73) Proprietor: Valeo Systèmes d'Essuyage, 78322 Le Mesnil Saint Denis (FR)
(72) Inventor: ANTOSZ, Piotr, 78321 LE MESNIL SAINT DENIS (FR); GUBALA, Radoslaw, 78321 LE MESNIL SAINT DENIS (FR)
(74) Representative: Valeo Visibility

(56) References cited:
- EP-A1- 3 053 790
- WO-A1-2020/212322
- WO-A1-2021/020123
- WO-A1-2021/197569
- DE-U1- 202018 006 130

## Description

The invention relates to a cover device for a wiper arm of a vehicle. The invention further relates to a windshield wiper system having at least one wiper arm and having such a cover device.

A wiper system comprises, in a known manner, a wiper blade connected to a wiper arm arranged pivotably with respect to each other. Patent application publications DE102005059730A1 and WO 2020/212322 A1 disclose such a system.

One aim of the present invention is to improve such a wiper system in case a cover is provided on a connection device between the wiper arm and a wiper blade.

This object is achieved by a cover device for a wiper arm comprising a top cover configured to be coupled to the wiper arm, said top cover having a release element configured to cooperate with a connection device between the wiper arm and a wiper blade in order to release the wiper blade from the wiper arm, wherein the release element has a button.

The cover device according to the invention may be used to enhance the aesthetic aspect of the wiper system together with providing a mechanism to release the wiper blade from the wiper arm, without removing the cover device from the wiper arm.

In other words, the cover device is a multifunction device.

Further functions may be added to the cover device.

For instance, the cover device may be shaped so as to form an aerodynamic spoiler at high speed.

According to the invention, the release element has a button. According to an aspect of the invention, the button is made integrally with the top cover.

According to an aspect of the invention, the button has an actuation surface on which a finger of a person can press to push the button in order to release the wiper blade from the wiper arm.

According to an aspect of the invention, said actuation surface has gripping veins. According to an aspect of the invention, the button is in the form of a flexible tab.

According to an aspect of the invention, the flexible tab extends in a window formed in the top cover.

According to an aspect of the invention, the flexible tab has a protrusion configured to actuate the connection device in order to release the wiper blade from the wiper arm. This is particularly advantageous when the replacement of the wiper blade is required as the cover does not need to be removed from the arm to replace the wiper blade.

According to an aspect of the invention, the protrusion is arranged so as to face the connection device when the cover device is mounted on the wiper arm.

According to an aspect of the invention, the protrusion is located at an end of the flexible tab.

According to an aspect of the invention, the top cover is made as a single part.

According to an aspect of the invention, the top cover is made of plastic material.

According to an aspect of the invention, the top cover has an outer face opposite the wiper arm and an inner face facing the wiper arm.

According to an aspect of the invention, the top cover comprises a main wall and two lateral wings configured in such a manner that, in a cross section, the top cover has a U shape.

According to an aspect of the invention, the release element is made on the main wall.

According to an aspect of the invention, the top cover has coupling elements configured to couple the cover device to the wiper arm.

According to an aspect of the invention, the coupling elements are located on the inner face of the top cover.

According to an aspect of the invention, the top cover comprises at least one pair of coupling elements.

According to an aspect of the invention, the top cover comprises a plurality of pairs of coupling elements, these pairs being preferably placed at different longitudinal locations of the top cover.

According to an aspect of the invention, the coupling elements are snap-fitting elements capable of elastic deformation to cooperate with the wiper arm.

According to an aspect of the invention, the coupling element is in the form of a clip protruding from the inner face of the top cover.

According to an aspect of the invention, some of the coupling elements protrude from the main wall of the top cover.

According to an aspect of the invention, some of the coupling elements protrude from the lateral wing of the top cover.

According to an aspect of the invention, the top cover comprises at least one rib on the inner face, the wiper arm coming in abutment on the rib once assembled with the cover device.

According to an aspect of the invention, the ribs are located between the coupling elements of a pair of coupling elements.

According to an aspect of the invention, the outer face of the top cover comprises an aerodynamic area configured to deflect a travel wind acting on the wiper arm and/or to reduce a wind resistance of the wiper arm.

According to an aspect of the invention, the aerodynamic area has a concave shape with the concavity oriented towards the wiper arm.

According to an aspect of the invention, the cover device comprises a bottom cover configured to be assembled with the top cover in such a manner to envelop at least partially the wiper arm.

According to an aspect of the invention, the top cover has a length greater than the length of the bottom cover.

The length is the dimension measured along a longitudinal axis of the cover device.

According to an aspect of the invention, the bottom cover has a plate-like shape.

According to an aspect of the invention, the top cover and the bottom cover have mounting elements configured to be coupled together.

According to an aspect of the invention, the bottom cover has mounting elements in the form of a tooth or a plurality of teeth capable to be engaged in mounting elements in the form of a hole or a plurality of holes in the top cover.

According to an aspect of the invention, the top cover has a flange or a plurality of flanges configured to maintain the bottom cover on the wiper arm.

According to an aspect of the invention, the bottom cover is made of plastic material.

According to an aspect of the invention, the bottom cover is made as a single part.

According to an aspect of the invention, the cover device has an elongated shape.

According to an aspect of the invention, the cover device extends on at least 60% or at least 80% or at least 90% of the entire length of the wiper arm.

According to an aspect of the invention, the cover device has a greater width than the wiper arm, on at least a portion of the length of the wiper arm.

The width is measured transversally to a longitudinal direction of the cover.

It is thus possible to place a washing fluid hose within the cover device. Thus, the cover device also serves to hold the hose, which is an additional advantage of the invention.

The invention also relates to a windshield wiper system having a wiper arm and a cover device as described above, the cover device being mounted on the wiper arm.

According to an aspect of the invention, the wiper system has a wiper blade which is connected in a replaceable manner on the wiper arm.

According to an aspect of the invention, the wiper arm is moved by means of a wiper motor.

According to an aspect of the invention, the wiper blade is connected to the wiper arm by means of the connection device which comprises an adapter.

According to an aspect of the invention, the adapter has a flexible tongue configured to cooperate with an end part of the wiper arm.

According to an aspect of the invention, said flexible tongue of the adapter is coupled with a hole of the end part of the wiper arm.

The flexible tongue and the hole form an easy connection device, enabling quick and simple connecting and disconnecting operations of the wiper arm and the wiper blade.

The cover device is well adapted to this type of easy connection device thanks to the release element that enables quick and simple connecting and disconnecting operations of the wiper arm and the wiper blade, even if the cover device is mounted on the wiper arm.

According to an aspect of the invention, the adapter is coupled to a connector mounted on the wiper blade.

According to an aspect of the invention, the connector has fluid supply channels and manifolds to be connected to fluid channels of the wiper blade.

According to an aspect of the invention, a supply hose is hydraulically connected to the supply channel(s) of the connector.

According to an aspect of the invention, the hose is connected to a washing fluid reservoir, and a pump is provided to supply the fluid to the wiper blade.

According to an aspect of the invention, the adapter can be disengaged from the wiper arm by pressing the flexible tongue so as to disengage said flexible tongue from the hole of the end part of the wiper arm.

According to an aspect of the invention, the release element of the cover device is configured to push, in particular by means of a protrusion on the release element of the cover device, the flexible tongue of the adapter in order to disengage the wiper blade from the wiper arm.

According to an aspect of the invention, said protrusion of the release element of the cover device is located above the flexible tongue of the adapter so that, when the release element is pressed, the protrusion contacts the flexible tongue and pushes it.

According to an aspect of the invention, the wiper blade has a wiper blade body with a plurality of spray openings for spraying a cleaning fluid on the vehicle windshield.

Further advantages, features and details of the invention will be apparent from the following description of a preferred example embodiment and with the aid of the drawings, showing in:
- Figure 1 is a partial perspective view of a wiper arm assembled with a wiper blade,
- Figure 2 shows a cover device according to an embodiment of the invention, mounted on the assembly of Figure 1, on the top side,
- Figure 3 shows the cover device of Figure 2, on the bottom side
- Figure 4 shows the cover device of Figure 2, without the bottom cover,
- Figure 5 shows partially, in a cross-section, the cover device of Figure 2 and the adapter,
- Figure 6 shows partially a detail of the top cover of the device of Figure 2.

Identical components or respectively components with the same function are provided with the same reference numbers in the figures.

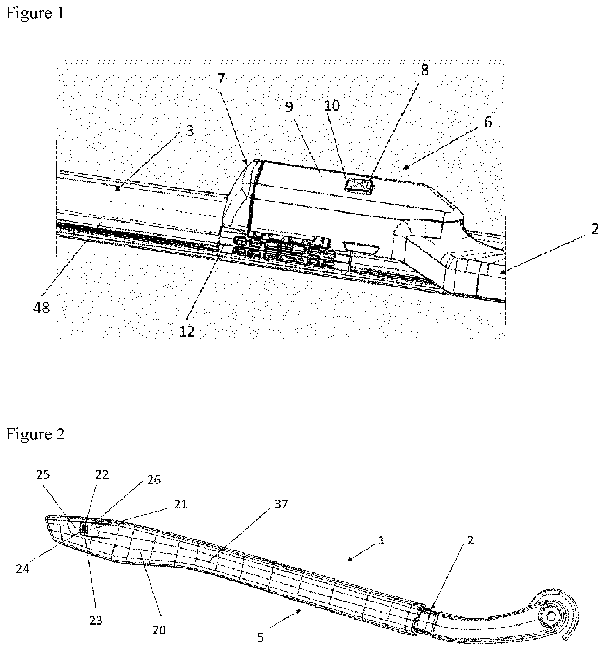

Figure 2 shows a windshield wiper system 1 having a wiper arm 2 and a cover device 5 mounted on the wiper arm 2.

Figure 1 shows the wiper arm 2 and the wiper blade 3 without the cover device 5.

The wiper blade 3 is connected in a replaceable manner on the wiper arm 2, as further explained below.

The wiper arm 2 is moved by means of a wiper motor (not illustrated).

The wiper blade 3 is connected to the wiper arm 2 by means of the connection device 6 which comprises an adapter 7, as illustrated in Figure 1.

The adapter 7 has a flexible tongue 8 configured to cooperate with an end part 9 of the wiper arm 2.

Said flexible tongue 8 of the adapter 7 is coupled with a hole 10 of the end part 9 of the wiper arm 2.

The flexible tongue 8 and the hole 10 form an easy connection device 6, enabling quick and simple connecting and disconnecting operations of the wiper arm 2 and the wiper blade 3.

The adapter 7 is coupled to a connector 12 mounted on the wiper blade 3.

The connector 12 has fluid supply channels (not illustrated) and manifolds 14 to be connected to fluid channels of the wiper blade 3.

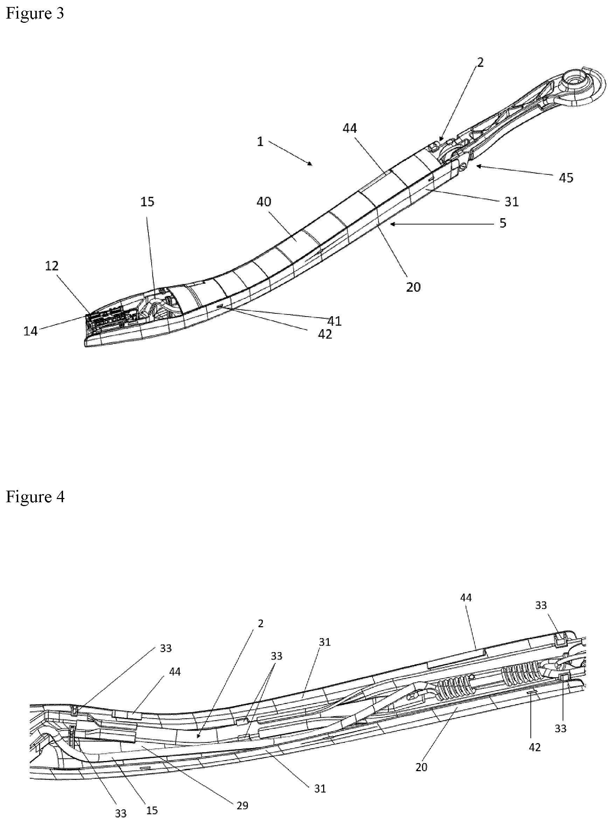

As better visible on Figure 4, a supply hose 15 is hydraulically connected to a supply channel of the connector 12.

The hose 15 is connected to a washing fluid reservoir, and a pump is provided to supply the fluid to the wiper blade 3.

The adapter 7 can be disengaged from the wiper arm 2 by pressing the flexible tongue 8 so as to disengage said flexible tongue 8 from the hole 10 of the end part 9 of the wiper arm 2.

The cover device 5 is configured to be coupled to the wiper arm 2 and has a top cover 20 having a release element 21 configured to cooperate with the connection device 6 between the wiper arm 2 and a wiper blade 3 in order to release the wiper blade 3 from the wiper arm 2.

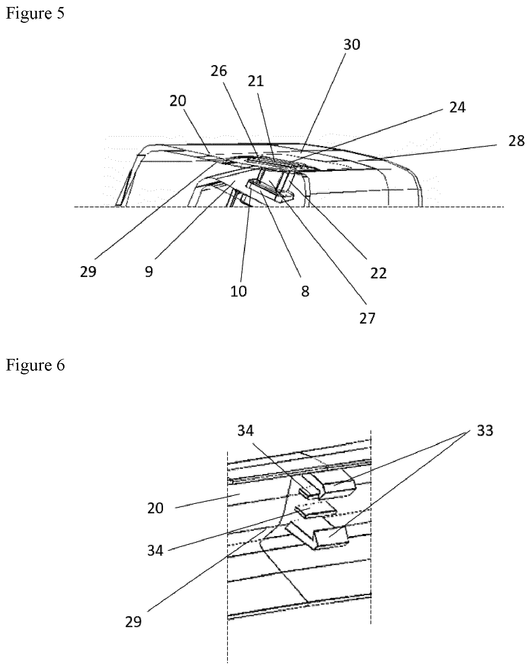

As illustrated in Figures 2 and 5, the release element 21 has a button 22.

The button 22 is made integrally with the top cover 20 and has an actuation surface 23 on which a finger of a person can press to push the button 22 in order to release the wiper blade 3 from the wiper arm 2.

Said actuation surface 23 has gripping veins 24.

The button 22 is in the form of a flexible tab 26 and extends in a window 25 formed in the top cover 20.

The flexible tab 26 has a protrusion 27 configured to actuate the connection device 6 in order to release the wiper blade 3 from the wiper arm 2.

The protrusion 27 is arranged so as to face the connection device 6 when the cover device 5 is mounted on the wiper arm 2.

The top cover 20 is made as a single part together with the button 22 and the protrusion 27.

The release element 21 of the cover device 5 is configured to push, by means of the protrusion 27, the flexible tongue 8 of the adapter 7 in order to disengage the wiper blade 3 from the wiper arm 2.

The protrusion 27 of the release element 21 of the cover device 5 is located above the flexible tongue 8 of the adapter so that, when the release element 21 is pressed, the protrusion 27 contacts the flexible tongue 8 and pushes it.

The top cover 20 is made of plastic material.

The top cover 20 has an outer face 28 opposite the wiper arm 2 and an inner face 29 facing the wiper arm 2.

The top cover 20 comprises a main wall 30 and two lateral wings 31 configured in such a manner that, in a cross section, the top cover 20 has a U shape.

The release element 21 is made on the main wall 30.

The top cover 20 has coupling elements 33 configured to couple the cover device 5 to the wiper arm 2.

The coupling elements 33 are located on the inner face 29 of the top cover 20.

The top cover 20 comprises three pairs of coupling elements 33, these pairs being placed at different longitudinal locations of the top cover 20.

The coupling elements 33 are snap-fitting elements capable of elastic deformation to cooperate with the wiper arm 2.

Each coupling element 33 is in the form of a clip protruding from the inner face 29 of the top cover 30.

Some of the coupling elements 33 protrude from the main wall 30 of the top cover 20 and some of the coupling elements 33 protrude from the lateral wing 31 of the top cover 20.

As illustrated on Figure 6, the top cover 20 comprises ribs 34 on the inner face, the wiper arm 2 coming in abutment on the ribs 34 once assembled with the cover device 5.

The ribs 34 are located between the coupling elements 33 of a pair of coupling elements.

The outer face 28 of the top cover 20 comprises an aerodynamic area 37 configured to deflect a travel wind acting on the wiper arm 2 and/or to reduce a wind resistance of the wiper arm 2.

The aerodynamic area 37 has a concave shape with the concavity oriented towards the wiper arm.

As illustrated in Figure 3, the cover device 5 comprises a bottom cover 40 configured to be assembled with the top cover 20 in such a manner to envelop the wiper arm 2.

The top cover 20 has a length greater than the length of the bottom cover 40.

The length is the dimension measured along a longitudinal axis of the cover device 5.

The bottom cover 40 has a plate-like shape.

The top cover 20 and the bottom cover 40 have mounting elements configured to be coupled together.

The bottom cover 40 has mounting elements 41 in the form of a plurality of teeth capable to be engaged in mounting elements 42 in the form of a plurality of holes in the top cover 20.

The top cover 20 has a plurality of flanges 44 configured to maintain the bottom cover 40 on the wiper arm 2.

The bottom cover 40 is made of plastic material, as a single part.

The cover device 5 has an elongated shape and extends on at least 60% of the entire length of the wiper arm 2.

In particular, the cover device 5 extends from the connection device 6 to a wiper arm pivotable articulation 45 (see figure 3).

The cover device 5 has a greater width than the wiper arm 2, on at least a portion of the length of the wiper arm.

The width is measured transversally to a longitudinal direction of the cover device 5.

It is thus possible to place the washing fluid hose 15 within the cover device 5.

The wiper blade 3 has a wiper blade body 48 with a plurality of spray openings (not illustrated) for spraying a cleaning fluid on the vehicle windshield.

The blade body 48 is made of elastic material, in particular of rubber.

The wiper body 48 has one or two fluid channels which are connected to spray openings to spray washing fluid.

## Claims

1. A cover device (5) for a wiper arm (2) comprising a top cover (20) configured to be coupled to the wiper arm, said top cover (20) having a release element (21) configured to cooperate with a connection device (6) between the wiper arm and a wiper blade (3) in order to release the wiper blade from the wiper arm, **characterized in that** the release element has a buttor (22).

2. The cover device according to claim 1, wherein the button (22) is made integrally with the top cover (20).

3. The cover device according to claim 1 or 2, wherein the button (22) has a flexible tab (26) extending in a window (25) formed in the top cover (20).

4. The cover device according to the preceding claim, wherein the flexible tab (26) has a protrusion (27) configured to actuate the connection device (6) in order to release the wiper blade (3) from the wiper arm (2).

5. The cover device according to the preceding claim, wherein the protrusion (27) is located at an end of the flexible tab (26).

6. The cover device according to any of the preceding claims, wherein the top cover (20) comprises a main wall (30) and two lateral wings (31) configured in such a manner that, in a cross section, the top cover has a U shape, and the release element (21) is made on the main wall (30).

7. The cover device according to any of the preceding claims, wherein the top cover (20) has coupling elements (33) configured to couple the cover device (5) to the wiper arm (2).

8. The cover device according to the preceding claim, wherein the coupling element (33) is in the form of a clip protruding from an inner face of the top cover (20).

9. The cover device according to any of the preceding claims, wherein an outer face of the top cover (20) comprises an aerodynamic area (37) configured to deflect a travel wind acting on the wiper arm and/or to reduce a wind resistance of the wiper arm (2).

10. The cover device according to any of the preceding claims, wherein the cover device (5) comprises a bottom cover (40) configured to be assembled with the top cover (20) in such a manner to envelop at least partially the wiper arm (2).

11. The cover device according to any of the preceding claims, wherein a washing fluid hose (15) is placed within the cover device (5).

12. A windshield wiper system (1) having a wiper arm (2) and a cover device (5) according to any one of the preceding claims, the cover device being mounted on the wiper arm.

13. The windshield wiper system according to the preceding claim, wherein a wiper blade (3) is connected to the wiper arm (2) by means of a connection device (6) which comprises an adapter (7), in particular the adapter having a flexible tongue (8) configured to cooperate with an end part of the wiper arm (2).

14. The windshield wiper system according to the preceding claim, wherein the release element (21) of the cover device (5) is configured to push, in particular by means of a protrusion on the release element of the cover device, the flexible tongue (8) of the adapter in order to disengage the wiper blade from the wiper arm.

## Patentansprüche

1. Eine Abdeckvorrichtung (5) für einen Wischerarm (2), umfassend eine obere Abdeckung (20), die dazu konfiguriert ist, mit dem Wischerarm gekoppelt zu werden, wobei die obere Abdeckung (20) ein Löseelement (21) aufweist, das dazu konfiguriert ist, mit einer Verbindungsvorrichtung (6) zwischen dem Wischerarm und einem Wischerblatt (3) zusammenzuwirken, um das Wischerblatt von dem Wischerarm zu lösen, ****dadurch gekennzeichnet**, dass** das Löseelement einen Knopf (22) aufweist.

2. Die Abdeckvorrichtung nach Anspruch 1, wobei der Knopf (22) einstückig mit der oberen Abdeckung (20) ausgebildet ist.

3. Die Abdeckvorrichtung nach Anspruch 1 oder 2, wobei der Knopf (22) eine flexible Lasche (26) aufweist, die sich in einem Fenster (25) erstreckt, das in der oberen Abdeckung (20) ausgebildet ist.

4. Die Abdeckvorrichtung nach dem vorhergehenden Anspruch, wobei die flexible Lasche (26) einen Vorsprung (27) aufweist, der dazu konfiguriert ist, die Verbindungsvorrichtung (6) zu betätigen, um das Wischerblatt (3) von dem Wischerarm (2) zu lösen.

5. Die Abdeckvorrichtung nach dem vorhergehenden Anspruch, wobei der Vorsprung (27) an einem Ende der flexiblen Lasche (26) angeordnet ist.

6. Die Abdeckvorrichtung nach einem der vorhergehenden Ansprüche, wobei die obere Abdeckung (20) eine Hauptwand (30) und zwei seitliche Flügel (31) umfasst, die derart konfiguriert sind, dass die obere Abdeckung im Querschnitt eine U-Form aufweist, und das Löseelement (21) an der Hauptwand (30) ausgebildet ist.

7. Die Abdeckvorrichtung nach einem der vorhergehenden Ansprüche, wobei die obere Abdeckung (20) Kopplungselemente (33) aufweist, die dazu konfiguriert sind, die Abdeckvorrichtung (5) mit dem Wischerarm (2) zu koppeln.

8. Die Abdeckvorrichtung nach dem vorhergehenden Anspruch, wobei das Kopplungselement (33) als Clip ausgebildet ist, der von einer Innenfläche der oberen Abdeckung (20) vorsteht.

9. Die Abdeckvorrichtung nach einem der vorhergehenden Ansprüche, wobei eine Außenfläche der oberen Abdeckung (20) einen aerodynamischen Bereich (37) umfasst, der dazu konfiguriert ist, einen Fahrtwind, der auf den Wischerarm wirkt, abzulenken und/oder einen Windwiderstand des Wischerarms (2) zu reduzieren.

10. Die Abdeckvorrichtung nach einem der vorhergehenden Ansprüche, wobei die Abdeckvorrichtung (5) eine untere Abdeckung (40) umfasst, die dazu konfiguriert ist, mit der oberen Abdeckung (20) derart zusammengefügt zu werden, dass sie den Wischerarm (2) zumindest teilweise umschließt.

11. Die Abdeckvorrichtung nach einem der vorhergehenden Ansprüche, wobei ein Waschflüssigkeitsschlauch (15) innerhalb der Abdeckvorrichtung (5) platziert ist.

12. Eine Windschutzscheiben-Wischeranlage (1) mit einem Wischerarm (2) und einer Abdeckvorrichtung (5) nach einem der vorhergehenden Ansprüche, wobei die Abdeckvorrichtung an dem Wischerarm montiert ist.

13. Windschutzscheiben-Wischeranlage nach dem vorhergehenden Anspruch, wobei ein Wischerblatt (3) mit dem Wischerarm (2) mittels einer Verbindungsvorrichtung (6) verbunden ist, die einen Adapter (7) umfasst, wobei insbesondere der Adapter eine flexible Zunge (8) aufweist, die dazu konfiguriert ist, mit einem Endteil des Wischerarms (2) zusammenzuwirken.

14. Windschutzscheiben-Wischeranlage nach dem vorhergehenden Anspruch, wobei das Löseelement (21) der Abdeckvorrichtung (5) dazu konfiguriert ist, insbesondere mittels eines Vorsprungs an dem Löseelement der Abdeckvorrichtung, die flexible Zunge (8) des Adapters zu drücken, um das Wischerblatt von dem Wischerarm zu lösen.

## Revendications

1. Un dispositif de recouvrement (5) pour un bras d'essuie-glace (2) comprenant un couvercle supérieur (20) configuré pour être couplé au bras d'essuie-glace, ledit couvercle supérieur (20) ayant un élément de libération (21) configuré pour coopérer avec un dispositif de connexion (6) entre le bras d'essuie-glace et une lame d'essuie-glace (3) afin de libérer la lame d'essuie-glace du bras d'essuie-glace, **caractérisé en ce que** l'élément de libération comporte un bouton (22).

2. Le dispositif de recouvrement selon la revendication 1, dans lequel le bouton (22) est réalisé d'un seul tenant avec le couvercle supérieur (20).

3. Le dispositif de recouvrement selon la revendication 1 ou 2, dans lequel le bouton (22) a une languette flexible (26) s'étendant dans une fenêtre (25) formée dans le couvercle supérieur (20).

4. Le dispositif de recouvrement selon la revendication précédente, dans lequel la languette flexible (26) a une protubérance (27) configurée pour actionner le dispositif de connexion (6) afin de libérer la lame d'essuie-glace (3) du bras d'essuie-glace (2).

5. Le dispositif de recouvrement selon la revendication précédente, dans lequel la protubérance (27) est située à une extrémité de la languette flexible (26).

6. Le dispositif de recouvrement selon l'une quelconque des revendications précédentes, dans lequel le couvercle supérieur (20) comprend une paroi principale (30) et deux ailes latérales (31) configurées de telle manière que, dans une section transversale, le couvercle supérieur a une forme en U, et l'élément de libération (21) est réalisé sur la paroi principale (30).

7. Le dispositif de recouvrement selon l'une quelconque des revendications précédentes, dans lequel le couvercle supérieur (20) a des éléments de couplage (33) configurés pour coupler le dispositif de recouvrement (5) au bras d'essuie-glace (2).

8. Le dispositif de recouvrement selon la revendication précédente, dans lequel l'élément de couplage (33) est sous la forme d'un clip faisant saillie d'une face intérieure du couvercle supérieur (20).

9. Le dispositif de recouvrement selon l'une quelconque des revendications précédentes, dans lequel une face extérieure du couvercle supérieur (20) comprend une zone aérodynamique (37) configurée pour dévier un vent de déplacement agissant sur le bras d'essuie-glace et/ou pour réduire une résistance au vent du bras d'essuie-glace (2).

10. Le dispositif de recouvrement selon l'une quelconque des revendications précédentes, dans lequel le dispositif de recouvrement (5) comprend un couvercle inférieur (40) configuré pour être assemblé avec le couvercle supérieur (20) de manière à envelopper au moins partiellement le bras d'essuie-glace (2).

11. Le dispositif de recouvrement selon l'une quelconque des revendications précédentes, dans lequel un tuyau de liquide de lavage (15) est placé à l'intérieur du dispositif de recouvrement (5).

12. Un système d'essuie-glace de pare-brise (1) ayant un bras d'essuie-glace (2) et un dispositif de recouvrement (5) selon l'une quelconque des revendications précédentes, le dispositif de recouvrement étant monté sur le bras d'essuie-glace.

13. Le système d'essuie-glace de pare-brise selon la revendication précédente, dans lequel une lame d'essuie-glace (3) est reliée au bras d'essuie-glace (2) au moyen d'un dispositif de connexion (6) qui comprend un adaptateur (7), en particulier l'adaptateur ayant une languette flexible (8) configurée pour coopérer avec une partie d'extrémité du bras d'essuie-glace (2).

14. Le système d'essuie-glace de pare-brise selon la revendication précédente, dans lequel l'élément de libération (21) du dispositif de recouvrement (5) est configuré pour pousser, en particulier au moyen d'une protubérance sur l'élément de libération du dispositif de recouvrement, la languette flexible (8) de l'adaptateur afin de dégager la lame d'essuie-glace du bras d'essuie-glace.
